# EUROPÄISCHE PATENTSCHRIFT

(11) **EP 3 676 047 B1**
(45) Veröffentlichungstag und Bekanntmachung des Hinweises auf die Patenterteilung: **29.09.2021**
(21) Anmeldenummer: 18755425.8
(22) Anmeldetag: 09.08.2018
(51) Int. Cl.: B23K 26/24, B23K 26/322, B23K 26/082

(54) **VERFAHREN ZUM LASERSTRAHLSCHWEISSEN EINES ODER MEHRERER STAHLBLECHE AUS PRESSHAERTBAREM MANGAN-BORSTAHL**
METHOD FOR LASER BEAM WELDING OF ONE OR MORE STEEL SHEETS MADE OF PRESS-HARDENABLE MANGANESE-BORON STEEL
PROCÉDÉ POUR LE SOUDAGE LASER D'UNE OU DE PLUSIEURS TÔLES D'ACIER CONSTITUÉES D'ACIER AU BORE ET AU MANGANÈSE POUVANT ÊTRE EMBOUTI À CHAUD

(30) Priorität: 31.08.2017 DE 102017120051
(43) Veröffentlichungstag der Anmeldung: 08.07.2020
(73) Patentinhaber: BAOSTEEL TAILORED BLANKS GMBH, 47259 Duisburg (DE)
(72) Erfinder: VON DER HEYDT, Jana, 47051 Duisburg (DE); BOTH, Dr.-Ing. Christian, 47059 Duisburg (DE); KESSLER, Michael, 50126 Bergheim (DE)
(74) Vertreter: Cohausz & Florack
(86) Internationale Anmeldenummer: PCT/EP2018/071573
(87) Internationale Veröffentlichungsnummer: WO 2019/042730

(56) Entgegenhaltungen:
- WO-A1-2017/103149
- DE-A1-102012 008 940
- DE-A1-102015 115 915
- US-A1- 2014 054 273

## Beschreibung

Die Erfindung betrifft ein Verfahren zum Laserstrahlschweißen eines oder mehrerer Stahlbleche aus presshärtbarem Mangan-Bor-Stahl, bei dem mindestens eines der Stahlbleche eine Beschichtung aus Aluminium aufweist und das Laserstrahlschweißen unter Zuführung von Zusatzdraht in das ausschließlich mittels eines Laserstrahls erzeugte Schmelzbad erfolgt, wobei der Zusatzdraht mindestens ein Austenit stabilisierendes Legierungselement enthält, und wobei der Laserstrahl derart in Oszillation versetzt wird, dass er quer zur Schweißrichtung oszilliert.

Ein derartiges Verfahren ist aus der WO 2017/103149 A1 bekannt.

In der Automobilherstellung gewinnen sogenannte warmumformbare, presshärtbare Stahlbleche aus Mangan-Bor-Stahl, zum Beispiel der Stahlsorte 22MnB5, immer mehr an Bedeutung. Im Anlieferungszustand, d.h. vor dem Presshärten, weisen Mangan-Bor-Stähle eine Zugfestigkeit von ca. 600 MPa und ein ferritisch-perlitisches Gefüge auf. Durch das Presshärten und die damit verbundene rasche Abkühlung nach dem Umformen kann ein vollständig martensitisches Gefüge eingestellt werden, welches Zugfestigkeiten im Bereich von 1500 bis 2000 MPa aufweisen kann.

Um eine Verzunderung der aus solchen Stahlblechen hergestellten Bauteile bei der Warmumformung zu vermeiden, sind die betreffenden Stahlbleche üblicherweise mit einer Beschichtung aus Aluminium, beispielsweise einer Aluminium-Silizium-Beschichtung versehen. Diese Oberflächenbeschichtung schützt die Werkstücke vor einer Oxidation im Ofen und erspart einen zusätzlichen Reinigungsschritt zum Entfernen von Zunder nach der Umformung. Auf die Qualität von Schweißnähten wirkt sich die Oberflächenbeschichtung jedoch sehr negativ aus. Denn durch das Schmelzschweißen der beschichteten Stahlbleche (z.B. mittels Laserstrahlschweißverfahren bei der Herstellung von Tailored Blanks) wird neben dem Grundwerkstoff auch die aluminiumhaltige Oberflächenbeschichtung aufgeschmolzen und dadurch Aluminium in die Schweißnaht eingebracht.

Aluminium ist nur bis zu einem Massenanteil von ca. 10 % in Eisen bzw. Stahl löslich. Bei einem höheren Massenanteil bilden sich spröde intermetallische Phasen, welche sich sehr negativ auf die mechanisch-technologischen Eigenschaften der Schweißnaht auswirken und zu einem Versagen der Schweißnaht schon bei geringen Beanspruchungen führen können. Liegt der Aluminiumgehalt in der Schweißnaht zwischen 2 und 10 Gew.-%, bilden sich zwar keine intermetallischen Phasen, jedoch kommt es zur Bildung von ferritischen Bereichen (Phasen), die zu einer Herabsetzung der Festigkeit der Schweißnaht führen. Die Festigkeit der Schweißnaht liegt in solchen Fällen unter der des Grundwerkstoffs, so dass mit einem Versagen des betreffenden Bauteils in der Schweißnaht zu rechnen ist, unabhängig von der gefügten Blechdickenkombination. Dies ist nach den Vorgaben der Automobilindustrie ungern gesehen oder gar nicht erst zulässig.

Um sowohl die Bildung von intermetallischen Phasen als auch die Ferritbildung zu verhindern, wird nach dem Stand der Technik eine vollständige oder teilweise Entfernung der Oberflächenbeschichtung im Randbereich der aneinander zu schweißenden Blechkanten vor dem Schweißprozess mittels mechanischer Werkzeuge oder mittels Laserstrahlabtragung durchgeführt (vgl. EP 2 007 545 B1). Für dieses zumindest teilweise Entfernen der Oberflächenbeschichtung ist jedoch ein zusätzlicher Prozessschritt erforderlich, welcher sowohl kosten- als auch zeitintensiv ist und somit die Wirtschaftlichkeit der Fertigung von Bauteilen der hier beschriebenen Art beeinträchtigen.

In der US 2008/0011720 A1 ist ein Laser-Lichtbogen-Hybridschweißverfahren beschrieben, bei dem Platinen aus Mangan-Bor-Stahl, die eine Aluminium enthaltende Oberflächenschicht aufweisen, im Stumpfstoß miteinander verbunden werden, wobei der Laserstrahl mit mindestens einem elektrischen Lichtbogen kombiniert ist, um das Metall am Stumpfstoß aufzuschmelzen und die Platinen miteinander zu verschweißen. Der elektrische Lichtbogen wird dabei mittels einer Wolfram-Schweißelektrode gebildet oder bildet sich bei Verwendung eines MIG-Schweißbrenners an der Spitze eines Zusatzdrahtes. Der Zusatzdraht kann Elemente (z.B. Mn, Ni und Cu) enthalten, welche die Umwandlung des Stahls in ein austenitisches Gefüge induzieren und eine Aufrechterhaltung der austenitischen Umwandlung im Schmelzbad begünstigen. Mit diesem Hybridschweißverfahren soll erreicht werden, dass warmumformbare Platinen aus Mangan-Bor-Stahl, die mit einer Beschichtung auf Aluminium-Silizium-Basis versehen sind, ohne vorherige Entfernung des Beschichtungsmaterials im Bereich der herzustellenden Schweißnaht verschweißt werden können, wobei aber dennoch sichergestellt sein soll, dass an den Stoßkanten der Platinen befindliches Aluminium nicht zu einer Herabsetzung der Zugfestigkeit des Bauteils in der Schweißnaht führt. Durch das Vorsehen eines elektrischen Lichtbogens hinter dem Laserstrahl sollen das Schmelzbad homogenisiert und dadurch örtliche Aluminiumkonzentrationen größer 1,2 Gew.-%, die ein ferritisches Gefüge erzeugen, eliminiert werden.

Dieses bekannte Hybridschweißverfahren ist hinsichtlich des Energieverbrauchs aufgrund der Erzeugung des elektrischen Lichtbogens relativ aufwendig. Ferner ist die Schweißgeschwindigkeit vergleichsweise niedrig. Zudem weist eine durch Laser-Lichtbogen-Hybridschweißen erzeugte Schweißnaht eine für die weitere Umformung ungünstige Nahtform auf, welche gegebenenfalls einer Nachbearbeitung bedarf.

Der vorliegenden Erfindung liegt die Aufgabe zugrunde, ein Laserstrahlschweißverfahren anzugeben, mit dem aluminiumbeschichtete Stahlbleche aus presshärtbarem Mangan-Bor-Stahl gefügt werden können, deren Schweißnaht nach dem Warmumformen (Presshärten) eine dem Grundwerkstoff vergleichbare Festigkeit aufweist, wobei sich das Verfahren durch eine hohe Produktivität, eine hohe Schweißnahtqualität sowie einen vergleichsweise geringen Energieverbrauch auszeichnen soll.

Zur Lösung dieser Aufgabe wird ein Verfahren mit den in Anspruch 1 angegebenen Merkmalen vorgeschlagen. Bevorzugte und vorteilhafte Ausgestaltungen des erfindungsgemäßen Verfahrens sind in den Unteransprüchen angegeben.

Die Erfindung sieht vor, dass bei einem Laserstrahlschweißverfahren der eingangs genannten Art die Oszillationsfrequenz des Laserstrahls mindestens 200 Hz, vorzugsweise mindestens 500 Hz beträgt, dass die Geometrie der Laserstrahlschweißnaht erfasst wird, und dass die Oszillationsfrequenz und/oder die Amplitude des oszillierenden Laserstrahls in Abhängigkeit der erfassten Geometrie der Laserschweißnaht variiert werden.

Durch die Zufuhr von im Wesentlichen aluminiumfreiem Zusatzdraht mit Austenit stabilisierenden Eigenschaften in das mittels des Laserstrahls erzeugte Schmelzbad wird das durch die Aufschmelzung der aluminiumhaltigen Oberflächenbeschichtung in das Schmelzbad eingebrachte Aluminium verdünnt und die Schweißnaht homogenisiert.

Die Erfindung basiert auf der Idee, durch eine Oszillation des Laserstrahls quer zur Schweißrichtung (strichförmig oder in definierten Stahlfiguren) eine weitere Homogenisierung der Schweißnaht zu erreichen und die metallurgische Kerbe zum Grundwerkstoff zu minimieren. Durch die Oszillation des Laserstrahls wird eine optimierte Vermischung des eingebrachten Aluminiums im gesamten Schweißnahtquerschnitt erzielt. Versuche haben ergeben, dass durch die Oszillation des Laserstrahls die Aluminiumbeschichtung im Bereich der Schweißnahtwurzel aus dem Schmelzbad herausgedrückt wird, so dass durch die Laserstrahloszillation das Einfließen von Aluminium in das Schmelzbad und damit der Aluminiumgehalt in der Schweißnaht minimiert werden kann.

Das erfindungsgemäße Verfahren bietet Kostenvorteile, da bei ihm der zusätzliche Prozessschritt des Abtragens der Aluminiumbeschichtung im Bereich der Schweißnaht der zu verschweißenden Blechkanten entfallen kann bzw. entfällt. Im Vergleich zum herkömmlichen Laserstrahlschweißen von aluminiumbeschichten Mangan-Bor-Stahlblechen nach vorheriger Entschichtung der Ränder der im Stumpfstoß zu fügenden Blechkanten erzielt das erfindungsgemäße Verfahren eine optimierte Schweißnahtgeometrie in Form eines größeren tragenden Querschnitts. Dies verbessert insbesondere die dynamische Belastbarkeit der Schweißnaht bzw. verringert die Materialermüdung im Bereich der Schweißnaht.

Außerdem bietet das erfindungsgemäße Laserstrahlschweißverfahren im Vergleich zum Laser-Lichtbogen-Hybridschweißen den Vorteil, dass die erzeugte Laserschweißnaht relativ schmal ist und sich durch eine bessere Nahtgeometrie insbesondere im Wurzelbereich auszeichnet.

Das erfindungsgemäße Verfahren kann nicht nur beim Aneinanderfügen mehrerer Stahlplatinen gleicher oder unterschiedlicher Blechdicke im Stumpfstoß zum Einsatz kommen, von denen mindestens eine Platine aus Mangan-Bor-Stahl hergestellt ist und ein- oder beidseitig mit einer Beschichtung aus Aluminium versehen ist, sondern beispielsweise auch beim Laserstrahlschweißen eines einzelnen platten- oder bandförmigen Stahlblechs aus presshärtbarem Mangan-Bor-Stahl, das eine Beschichtung aus Aluminium aufweist, wobei im letztgenannten Fall die miteinander zu verschweißenden Blechkanten durch Umformen, beispielsweise durch Abkanten oder Rollformen, aufeinander zu bewegt werden, so dass sie schließlich einander zugewandt im Stumpfstoß angeordnet sind. Des Weiteren liegt auch eine Anwendung des erfindungsgemäßen Verfahrens beim Laserstrahlschweißen eines oder mehrerer Stahlbleche aus presshärtbarem Mangan-Bor-Stahl im Überlappstoß, wobei mindestens eines der Stahlbleche ein- oder beidseitig mit einer Beschichtung aus Aluminium versehen ist und das Laserstrahlschweißen unter Zuführung von Zusatzdraht in das ausschließlich mittels des Laserstrahls erzeugte Schmelzbad erfolgt, und wobei der Zusatzdraht mindestens ein Austenit stabilisierendes Legierungselement enthält, im Rahmen der Erfindung.

Die erfindungsgemäße Regelung der Oszillationsfrequenz und/oder der Amplitude des Laserstrahls in Abhängigkeit der Geometrie der Schweißnaht ist vorzugsweise als automatische Regelung unter Verwendung einer die Geometrie der Schweißnaht erfassenden Sensoreinrichtung, eines Rechners zur Auswertung der Messsignale der Sensoreinrichtung und einer von dem Rechner gesteuerten Stelleinrichtung zur Steuerung eines Laserstrahloszillators, z.B. eines rotierenden oder oszillierenden Ablenkspiegels, ausgeführt. Hierdurch wird bei hoher Produktivität eine hohe Schweißnahtqualität sichergestellt.

Eine Ausgestaltung der Erfindung sieht vor, dass das oder die Stahlbleche beim Laserstrahlschweißen im Stumpfstoß oder Überlappstoß mit einem Spalt von weniger als 0,8 mm, vorzugsweise weniger als 0,6 mm, besonders bevorzugt weniger als 0,4 mm gefügt wird bzw. werden. Eine geringe Spaltweite in der Größenordnung von wenigen Zehntelmillimetern begünstigt eine hohe Schweißgeschwindigkeit und damit eine hohe Produktivität des Schweißverfahrens. Zudem begünstigt eine geringe Spaltweite in der angegebenen Größenordnung die Optimierung der Nahtgeometrie.

Eine weitere Ausgestaltung der Erfindung besteht darin, dass die Amplitude der Oszillation des Laserstrahls weniger als 2 mm, vorzugsweise weniger als 1 mm beträgt. Eine Amplitude der Laserstrahloszillation in dieser Größenordnung gestattet die Realisierung einer hohen Schweißgeschwindigkeit und somit einer hohen Produktivität des Schweißverfahrens. Die relativ kleine Amplitude der Laserstrahloszillation lässt sich mittels kompakt bauender Laserstrahlleiteinrichtungen, vorzugsweise mittels eines rotierenden oder oszillierenden Ablenkspiegels verwirklichen.

Die Oszillationsfrequenz des Laserstrahls liegt bei dem erfindungsgemäßen Verfahren vorzugsweise im Bereich von 200 Hz bis 1,2 kHz, besonders bevorzugt im Bereich von 300 Hz bis 1 kHz. Diese Ausgestaltung begünstigt bei hoher Schweißgeschwindigkeit eine optimierte Vermischung von aus der Oberflächenbeschichtung in das Schmelzbad eingeflossenem Aluminium sowie eine Verminderung der metallurgischen Kerbe zum Grundwerkstoff.

Zur Erzielung einer möglichst homogenen Schweißnaht mit minimalem Aluminiumgehalt sowie einer optimierten Nahtgeometrie ist auch günstig, wenn bei der Durchführung des erfindungsgemäßen Verfahrens das Laserstrahlschweißen mit einer Vorschubgeschwindigkeit (Schweißgeschwindigkeit) von mehr als 4 m/min, vorzugsweise mit einer Vorschubgeschwindigkeit im Bereich von 5 bis 8 m/min erfolgt.

Nach einer weiteren Ausgestaltung der Erfindung erfolgt die Oszillation des Laserstrahls mit einem strichförmigen, ringförmigen oder polygonalen Schwingungsprofil. Solche Schwingungsprofile (Strahlfiguren) sind günstig für die Homogenisierung der Schweißnaht und die Verminderung der metallischen Kerbe zum Grundwerkstoff.

In einer bevorzugten Ausgestaltung der Erfindung werden das bzw. die zu verschweißenden Stahlbleche dahingehend ausgewählt, dass ihr Grundwerkstoff (Mangan-Bor-Stahl) folgende Zusammensetzung aufweist: 0,10 bis 0,50 Gew.-% C, max. 0,40 Gew.-% Si, 0,50 bis 2,00 Gew.-% Mn, max. 0,025 Gew.-% P, max. 0,010 Gew.-% S, max. 0,60 Gew.-% Cr, max. 0,50 Gew.-% Mo, max. 0,050 Gew.-% Ti, 0,0008 bis 0,0070 Gew.-% B, und min. 0,010 Gew.-% Al, Rest Fe und unvermeidbare Verunreinigungen. Die aus einem solchen Stahl hergestellten Bauteile weisen nach einem Presshärten eine relativ hohe Zugfestigkeit auf.

Besonders bevorzugt werden in dem erfindungsgemäßen Verfahren Mangan-Bor-Stahlbleche verwendet, die nach dem Presshärten eine Zugfestigkeit im Bereich von 1500 bis 2000 MPa aufweisen.

Eine weitere vorteilhafte Ausgestaltung der Erfindung sieht vor, dass der in dem Laserstrahlschweißverfahren verwendete Zusatzdraht einen Kohlenstoff-Massenanteil von mindestens 0,1 Gew.-%, vorzugsweise mindestens 0,3 Gew.-% aufweist. Hierdurch wird die Härtbarkeit der Schweißnaht verbessert.

Der in dem erfindungsgemäßen Verfahren verwendete Zusatzdraht weist vorzugsweise folgende Zusammensetzung auf: 0,1 - 0,4 Gew.-% C, 0,5 - 2,0 Gew.-% Si, 1,0 - 2,5 Gew.-% Mn, 0,5 - 5,0 Gew.-% Cr + Mo, und 1,0 - 4,0 Gew.-% Ni, Rest Eisen und unvermeidbare Verunreinigungen. Versuche haben ergeben, dass sich mit einem solchen Zusatzdraht unter Anwendung des erfindungsgemäßen Verfahrens in sehr zuverlässiger Weise eine vollständige Umwandlung der Schweißnaht in ein martensitisches Gefüge beim Presshärten der gefügten Stahlbleche sicherstellen lässt.

Eine weitere vorteilhafte Ausgestaltung der Erfindung ist dadurch gekennzeichnet, dass der Zusatzdraht vor dem Zuführen in das Schmelzbad zumindest in einem Längenabschnitt auf eine Temperatur von mindestens 50°C, vorzugsweise mindestens 90°C erwärmt wird. Hierdurch lässt sich eine höhere Prozessgeschwindigkeit bzw. eine höhere Produktivität erzielen. Insbesondere muss dabei nicht so viel Energie mit dem Laserstrahl aufgewendet werden, um den Zusatzdraht zu schmelzen. Zudem begünstigt die Erwärmung des Zusatzdrahtes die Homogenisierung der Schweißnaht.

Um eine Versprödung der Schweißnaht zu verhindern, sieht eine weitere Ausgestaltung des erfindungsgemäßen Verfahrens vor, dass das Schmelzbad während des Laserstrahlschweißens mit Schutzgas (Inertgas) beaufschlagt wird. Bei dem verwendeten Schutzgas handelt es sich vorzugsweise um reines Argon, Helium, Stickstoff oder deren Mischung oder ein Gemisch aus Argon, Helium, Stickstoff und/oder Kohlendioxid und/oder Sauerstoff.

Die in dem erfindungsgemäßen Verfahren verwendeten Stahlbleche haben eine Blechdicke, die beispielsweise im Bereich von 0,5 bis 4 mm, vorzugsweise im Bereich von 0,8 bis 2,5 mm liegt. Die Stahlbleche können dabei eine unterschiedliche Blechdicke und/oder eine unterschiedliche Zugfestigkeit aufweisen.

Nachfolgend wird die Erfindung anhand einer mehrere Ausführungsbeispiele darstellenden Zeichnung näher erläutert. Es zeigen:
- Fig. 1: eine schematische Darstellung von Teilen einer Vorrichtung zur Durchführung des erfindungsgemäßen Laserstrahlschweißverfahrens, teilweise in Vertikalschnittansicht, wobei zwei presshärtbare Stahlplatinen gleicher Dicke miteinander verschweißt werden;
- Fig. 2: eine schematische Darstellung von Teilen einer Vorrichtung zur Durchführung des erfindungsgemäßen Laserstrahlschweißverfahrens, teilweise in Vertikalschnittansicht, wobei hier zwei unterschiedlich dicke, presshärtbare Stahlplatinen miteinander verschweißt werden; und
- Fig. 3: eine perspektivische, schematische Darstellung von Teilen einer Vorrichtung zur Durchführung des erfindungsgemäßen Laserstrahlschweißverfahrens, wobei wiederum zwei presshärtbare Stahlplatinen miteinander verschweißt werden.

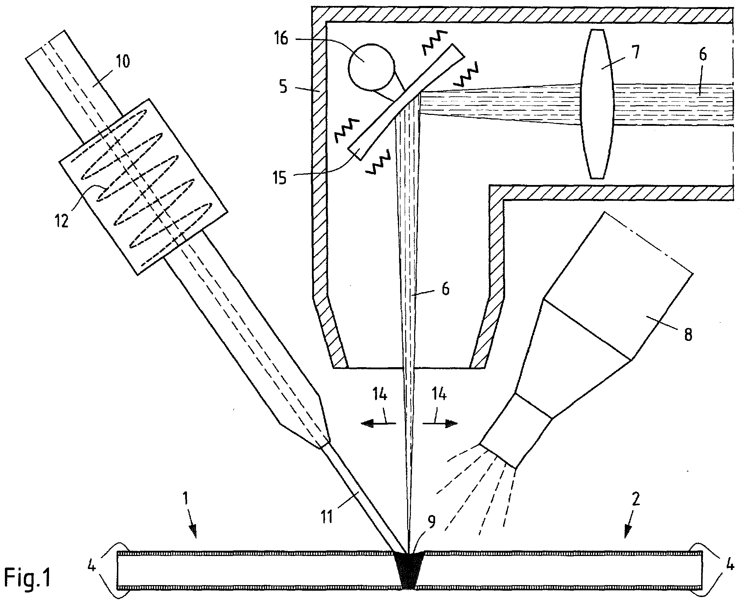

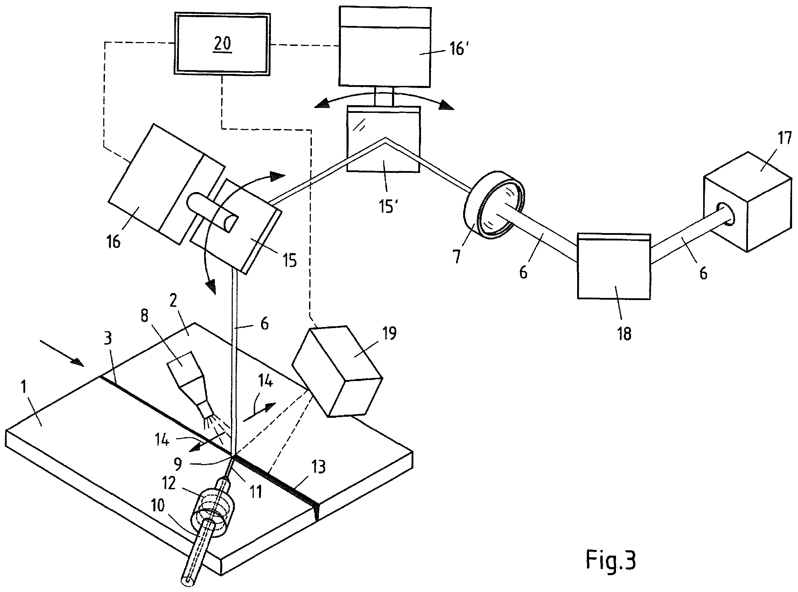

In Fig. 1 ist eine Laserstrahlschweißvorrichtung skizziert, mittels der das erfindungsgemäße Verfahren durchgeführt werden kann. Die Vorrichtung umfasst eine Unterlage (nicht gezeigt), auf der zwei Bänder oder Platinen 1, 2 aus Stahl gleicher oder unterschiedlicher Werkstoffgüte derart angeordnet sind, dass ihre miteinander zu verschweißenden Kanten als Stumpfstoß aneinander liegen. Zumindest eines der Stahlbleche 1, 2 ist aus presshärtbarem Mangan-Bor-Stahl hergestellt. Die Stahlbleche 1, 2 werden mit einem Spalt 3 von wenigen Zehntelmillimetern im Stumpfstoß gefügt (vgl. Fig. 3). Der Spalt 3 beträgt beispielsweise weniger als 0,6 mm, vorzugsweise weniger als 0,4 mm. Sofern die Stahlbleche 1, 2 aus Stahl unterschiedlicher Werkstoffgüte hergestellt sind, so besitzt das eine Stahlblech 1 oder 2 beispielsweise eine relativ weiche Tiefziehgüte, während das andere Stahlblech 2 bzw. 1 aus höherfestem Stahl besteht.

Der presshärtbare Stahl, aus dem zumindest eines der miteinander zum Beispiel im Stumpfstoß zu verbindenden Stahlbleche 1, 2 besteht, kann beispielsweise folgende chemische Zusammensetzung aufweisen:
max. 0,45 Gew.-% C,
max. 0,40 Gew.-% Si,
max. 2,0 Gew.-% Mn,
max. 0,025 Gew.-% P,
max. 0,010 Gew.-% S,
max. 0,8 Gew.-% Cr + Mo,
max. 0,05 Gew.-% Ti,
max. 0,0050 Gew.-% B, und
min. 0,010 Gew.-% Al,
Rest Fe und unvermeidbare Verunreinigungen.

Im Anlieferungszustand, d.h. vor einer Wärmebehandlung und schnellen Abkühlung, besitzen die presshärtbaren Stahlplatinen 1, 2 eine Streckgrenze Re von vorzugsweise mindestens 300 MPa; ihre Zugfestigkeit Rm beträgt z.B. mindestens 480 MPa, und ihre Bruchdehnung A₈₀ liegt vorzugsweise bei mindestens 10%. Nach dem Warmumformen (Presshärten), d.h. einem Erhitzen auf Austenitisierungstemperatur von ca. 900 bis 950°C, Umformen bei dieser Temperatur und anschließendem schnellen Abkühlen, weisen die Stahlplatinen 1, 2 eine Streckgrenze Re von ca. 1.100 MPa, eine Zugfestigkeit Rm von ca. 1.500 bis 2000 MPa und eine Bruchdehnung A₈₀ von ca. 5,0% auf.

Die Stahlbleche 1, 2 sind mit einer metallischen Beschichtung 4 aus Aluminium versehen. Es handelt sich vorzugsweise um eine Al-Si-Beschichtung. Die metallische Beschichtung 4 ist auf den Grundwerkstoff beidseitig aufgebracht, beispielsweise durch Schmelztauchbeschichten, indem ein Band aus presshärtbarem Mangan-Bor-Stahl durch ein Al-Si-Schmelzbad geleitet, überschüssiges Beschichtungsmaterial von dem Band abgeblasen und das beschichtete Band anschließend nachbehandelt, insbesondere erhitzt wird. Der Aluminiumgehalt der Beschichtung 4 kann im Bereich von 70 bis 90 Gew.-% liegen.

Alternativ kann auch nur eines der zu verschweißenden Stahlbleche 1, 2 eine Aluminiumbeschichtung 4 aufweisen. Ferner kann die Aluminiumbeschichtung 4 gegebenenfalls nur auf einer Seite des oder der Stahlbleche 1, 2 appliziert sein, z.B. mittels physikalischer Gasphasenabscheidung (PVD) oder mittels eines elektrolytischen Beschichtungsprozesses.

Die Stahlbleche 1, 2 sind in dem in Fig. 1 gezeigten Ausführungsbeispiel beispielsweise im Wesentlichen gleich dick. Die Blechdicke liegt beispielsweise im Bereich von 0,8 bis 3,0 mm, wobei die Dicke der Beschichtung auf der jeweiligen Blechseite weniger als 100 µm, insbesondere weniger als 50 µm beträgt.

Oberhalb der Stahlbleche 1, 2 ist ein Abschnitt eines Laserschweißkopfes 5 skizziert, der mit einer Optik zur Formung und Ausrichtung eines Laserstrahls 6, insbesondere einer Fokussierlinse 7 versehen ist. Der Laserstrahl 6 wird zum Beispiel mittels einer Nd:YAG-Laseranlage erzeugt, die eine Leistung beispielsweise im Bereich von 5 bis 6 kW liefert.

Dem Laserschweißkopf 5 ist eine Leitung 8 zur Zuführung von Schutzgas zugeordnet. Die Mündung der Schutzgasleitung 8 ist im Wesentlichen auf das mit dem Laserstrahl 6 erzeugte Schmelzbad 9 gerichtet. Als Schutzgas wird vorzugsweise reines Argon oder beispielsweise ein Gemisch aus Argon, Helium und/oder Kohlendioxid verwendet.

Zudem ist dem Laserschweißkopf 5 eine Drahtzuführungseinrichtung 10 zugeordnet, mittels der dem Schmelzbad 9 ein spezielles Zusatzmaterial in Form eines Drahtes 11 zugeführt wird, das durch den Laserstrahl 6 ebenfalls aufgeschmolzen wird. Der Zusatzdraht 11 wird dem Schmelzbad 9 vorzugsweise in erwärmtem Zustand zugeführt. Hierzu ist die Drahtzuführungseinrichtung 10 mit mindestens einem Heizelement 12, beispielsweise einer den Draht 11 umgebenden Heizspirale ausgestattet. Mit dem Heizelement wird der Zusatzdraht 11 vorzugsweise auf eine Temperatur von mindestens 50°C, besonders bevorzugt auf mindestens 90°C aufgeheizt.

Der Zusatzdraht 11 enthält im Wesentlichen kein Aluminium. Er weist beispielsweise folgende chemische Zusammensetzung auf:
0,1 Gew.-% C,
0,8 Gew.-% Si,
1,8 Gew.-% Mn,
0,35 Gew.-% Cr,
0,6 Gew.-% Mo, und
2,25 Gew.-% Ni,
Rest Fe und unvermeidbare Verunreinigungen.

Der Zusatzdraht 11 wird dem mittels des Laserstrahls 6 erzeugten Schmelzbad 9 zugeführt, um den Massengehalt des durch die Aufschmelzung der Beschichtung 4 in das Schmelzbad 9 eingebrachten Aluminiums zu reduzieren und das Schmelzbad 9 bzw. die Schweißnaht zu homogenisieren. Der Zusatzdraht 11 enthält Austenit stabilisierende Legierungselemente.

Der Mangan-Gehalt des Zusatzdrahtes 11 ist dabei stets höher als der Mangan-Gehalt des Grundwerkstoff der beschichteten Stahlbleche 1, 2. Vorzugsweise liegt der Mangan-Gehalt des Zusatzdrahtes 11 um ca. 0,2 Gew.-% höher als der Mangan-Gehalt des Grundwerkstoff der beschichteten Stahlbleche 1, 2. Ferner ist es günstig, wenn auch Gehalt an Chrom und Molybdän des Zusatzdrahtes 11 höher als im Grundwerkstoff der Stahlblechen 1, 2 ist. Vorzugsweise liegt der kombinierte Chrom-Molybdän-Gehalt des Zusatzdrahtes 11 um ca. 0,2 Gew.-% höher als der kombinierte Chrom-Molybdän-Gehalt des Grundwerkstoffs der Stahlbleche 1, 2. Der Nickelgehalt des Zusatzdrahtes 11 liegt vorzugsweise im Bereich von 1 bis 4 Gew.-%. Zudem weist der Zusatzdraht 11 vorzugsweise einen Kohlenstoffgehalt von mindestens 0,1 Gew.-%, besonders bevorzugt mindestens 0,3 Gew.-% auf.

Um eine weitere Homogenisierung der Schweißnaht zu verwirklichen und die metallische Kerbe zum Grundwerkstoff zu mindern, wird der Laserstrahl 6 derart in Oszillation versetzt, dass er mit hoher Frequenz quer zur Schweißrichtung oszilliert.

Die Oszillation des Laserstrahls 6 ist in Fig. 1 durch die quer zum Fügestoß gerichteten Pfeile 14 angedeutet. Die Oszillationsfrequenz des Laserstrahls 6 beträgt mindestens 200 Hz, vorzugsweise mindestens 500 Hz, besonders bevorzugt mindestens 600 Hz. Die Oszillation des Laserstrahls 6 wird beispielsweise mittels eines im Laserschweißkopf 5 angeordneten Umlenkspiegels (Ablenkspiegel) 15 bewirkt, der mit einem den Spiegel 15 in hochfrequente Schwingungen versetzenden Aktor 16, beispielsweise einem Piezoantrieb (Piezoaktor) versehen ist. Der Umlenkspiegel 15 kann dabei vorteilhaft auch als Fokussierspiegel ausgeführt sein.

Die Amplitude der Laserstrahloszillation beträgt vorzugsweise weniger als 2 mm. Beim Fügen der Stahlblechplatinen 1, 2 mit einem Spalt 3 von wenigen Zehntelmillimetern, z.B. einer Spaltweite im Bereich von 0,9 bis 0,2 mm, kann die Amplitude der Oszillation des Laserstrahls beispielsweise im Bereich von 1,5 bis 0,5 mm liegen. Die Oszillation des Laserstrahls 6 wird mit einem bestimmten Schwingungsprofil (Strahlfigur) durchgeführt. Der dem Umlenkspiegel (Ablenkspiegel) 15 zugeordnete Aktor 16 und die Lagerung des Umlenkspiegels 15 sind vorzugsweise derart ausgebildet bzw. einstellbar, dass die Oszillation des Laserstahls 6 ein strichförmiges, ringförmiges oder polygonales Schwingungsprofils aufweist. Die ringförmige Strahlfigur kann dabei eine kreisringförmige, ovale oder 8-förmige Schwingprofilkontur aufweisen. Die polygonale Strahlfigur kann dagegen insbesondere eine dreieckige, rechteckige oder trapezförmige Schwingprofilkontur aufweisen. Die Lagerung des schwingfähigen Umlenkspiegels 15 ist beispielsweise mittels einer federelastischer Aufhängung und/oder eines Festkörpergelenks realisiert.

Die Stahlbleche 1,2 werden mit einer Vorschubgeschwindigkeit von vorzugsweise mehr als 4 m/min, beispielsweise mit einer Vorschubgeschwindigkeit im Bereich von 5 bis 6 m/min geschweißt, wobei entweder die Stahlbleche 1, 2 mittels einer verfahrbaren Unterlage relativ zu dem Laserstrahl 6 oder der Laserstrahl 6 mittels eines Roboterarms relativ zu den Stahlbleche 1, 2 bewegt wird. Es stellt sich dabei eine Überlagerung des Schwingprofils des Laserstrahls 6 mit der Vorschubbewegung der Stahlbleche 1, 2 bzw. des Laserschweißkopfes 5 ein.

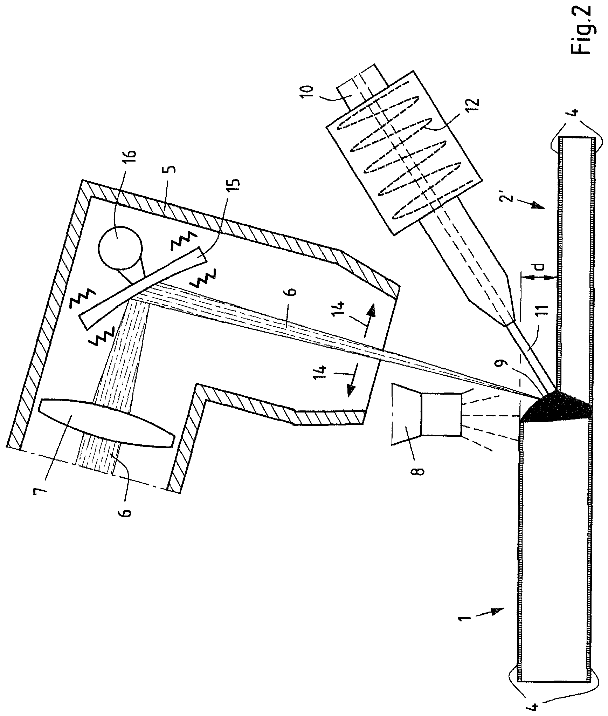

Das in Fig. 2 skizzierte Ausführungsbeispiel unterscheidet sich von dem in Fig. 1 gezeigten Beispiel dadurch, dass die Stahlbleche 1, 2' verschieden dick sind, so dass an dem Stumpfstoß ein Dickensprung d vorliegt. Beispielsweise besitzt das eine Stahlblech 2' eine Blechdicke im Bereich von 0,8 mm bis 1,2 mm, während das andere Stahlblech 1 eine Blechdicke im Bereich von 1,6 mm bis 3,0 mm aufweist. Darüber hinaus können sich die im Stumpfstoß miteinander zu verbindenden Stahlbleche 1, 2' auch in ihrer Werkstoffgüte voneinander unterscheiden. Beispielsweise ist die dickere Platine 1 aus höherfestem Stahl hergestellt, wohingegen die dünnere Stahlplatine 2' eine relativ weiche Tiefziehgüte besitzt. Die Stahlbleche 1, 2' werden ebenfalls mit einem Spalt von wenigen Zehntelmillimetern aneinandergefügt.

Die zum Fügen der Stahlbleche 1, 2' verwendete Laserstrahlschweißvorrichtung entspricht im Wesentlichen der in Fig. 1 skizzierten Laserstrahlschweißvorrichtung, so dass hinsichtlich der Ausführung dieser Vorrichtung auf die voranstehende Beschreibung verwiesen wird.

In Fig. 3 ist ein weiteres Ausführungsbeispiel einer Vorrichtung zur Durchführung des erfindungsgemäßen Laserstrahlschweißverfahrens skizziert. Die Laserstrahlschweißvorrichtung umfasst einen Laserstrahlgenerator 17, dessen Laserstrahl 6 mittels eines Ablenkspiegels 18 oder dergleichen auf eine Fokussierlinse 7 geleitet wird. Der fokussierte Laserstrahl 6 wird dann mittels mindestens einer oszillierenden Ablenkeinrichtung auf den einen geringen Spalt 3 begrenzenden Fügestoß der im Stumpfstoß miteinander zu verschweißenden Stahlbleche 1, 2 geleitet. Die oszillierende Ablenkeinrichtung kann dabei aus einem oder mehreren Ablenkspiegeln 15, 15' gebildet sein. Der Ablenkspiegel 15, 15' ist mit einem Schwingaktuator 16, 16' beispielsweise einem Piezoantrieb versehen.

Dem ausschließlich mittels des oszillierenden Laserstrahls 6 erzeugten Schmelzbad 9 wird über eine Drahtzuführeinrichtung 10 ein Austenit stabilisierende Eigenschaften aufweisendes Zusatzmaterial in Form eines Drahtes 11 zugeführt, wobei die Spitze des Zusatzdrahtes im Schmelzbad 9 bzw. im Arbeitspunkt des Laserstrahls 6 abschmilzt. Mittels einer Gaszufuhrleitung 8, deren Auslassöffnung auf das Schmelzbad 9 gerichtet ist, wird dieses mit Schutzgas, z.B. Argon und/oder Helium, beaufschlagt.

Des Weiteren weist die Laserstrahlschweißvorrichtung gemäß Fig. 3 eine Vorrichtung auf, mittels der die Geometrie der Schweißnaht 13 erfasst wird und die Oszillationsfrequenz und/oder die Amplitude des oszillierenden Laserstrahls 6 in Abhängigkeit der erfassten Geometrie der Schweißnaht 13 automatisch variiert werden. Die Geometrie der Laserstrahlschweißnaht wird beispielsweise mittels einer Sensoreinrichtung 19 erfasst, die eine Kamera und eine Laserlinienbeleuchtung aufweist, wobei die Geometrie der Schweißnaht 13, insbesondere unterschiedliche Höhenprofile und deren Positionen nach der Triangulationsmethode erfasst werden. Alternativ oder zusätzlich kann die Geometrie der Schweißnaht 13 auch mittels induktiver Messverfahren, insbesondere Wirbelstromprüfung bzw. einer Wirbelstromsonde erfasst werden. Die Messsignale der Sensoreinrichtung werden an einen Rechner 20 übertragen, der die Messsignale auswertet und den oder die Schwingaktoren 16, 16' in Abhängigkeit der Messsignale der Sensoreinrichtung steuert.

Die Ausführung der Erfindung ist nicht auf die in der Zeichnung skizzierten Ausführungsbeispiele beschränkt. Vielmehr sind zahlreiche Varianten denkbar, die auch bei einer von den skizzierten Beispielen abweichenden Gestaltung von der Erfindung, wie sie in den beigefügten Ansprüchen angegeben ist, Gebrauch machen.

### Bezugszeichenliste

- 1: Stahlblech (Platine)
- 2: Stahlblech (Platine)
- 2': Stahlblech (Platine)
- 3: Spalt
- 4: metallische Beschichtung aus Al, z.B. Al-Si
- 5: Laserschweißkopf
- 6: Laserstrahl
- 7: Fokussierlinse
- 8: Zufuhrleitung für Schutzgas
- 9: Schmelzbad
- 10: Drahtzuführeinrichtung
- 11: Zusatzdraht
- 12: Heizelement
- 13: Schweißnaht
- 14: Pfeile
- 15, 15': Umlenkspiegel (Ablenkspiegel)
- 16, 16': Aktor
- 17: Laserstrahlgenerator
- 18: Ablenkspiegel
- 19: Sensoreinrichtung
- 20: Rechner (Steuerung)
- d: Dickensprung

## Patentansprüche

1. Verfahren zum Laserstrahlschweißen eines oder mehrerer Stahlbleche aus presshärtbarem Mangan-Bor-Stahl, bei dem mindestens eines der Stahlbleche (1, 2; 2') eine Beschichtung (4) aus Aluminium aufweist und das Laserstrahlschweißen unter Zuführung von Zusatzdraht (11) in das ausschließlich mittels eines Laserstrahls (6) erzeugte Schmelzbad (9) erfolgt, wobei der Zusatzdraht (11) mindestens ein Austenit stabilisierendes Legierungselement enthält, und wobei der Laserstrahl (6) derart in Oszillation versetzt wird, dass er quer zur Schweißrichtung oszilliert, **dadurch gekennzeichnet, dass** die Oszillationsfrequenz des Laserstrahls (6) mindestens 200 Hz, vorzugsweise mindestens 500 Hz beträgt, dass die Geometrie der Schweißnaht (13) erfasst wird, und dass die Oszillationsfrequenz und/oder die Amplitude des oszillierenden Laserstrahls (6) in Abhängigkeit der erfassten Geometrie der Schweißnaht (13) variiert werden.

2. Verfahren nach Anspruch 1, **dadurch gekennzeichnet, dass** das oder die Stahlbleche (1, 2; 2') beim Laserstrahlschweißen im Stumpfstoß oder Überlappstoß mit einem Spalt (3) von weniger als 0,8 mm, vorzugsweise weniger als 0,6 mm, besonders bevorzugt weniger als 0,4 mm gefügt wird bzw. werden.

3. Verfahren nach Anspruch 1 oder 2, **dadurch gekennzeichnet, dass** die Amplitude der Oszillation des Laserstrahls (6) weniger als 2 mm, vorzugsweise weniger als 1 mm beträgt.

4. Verfahren nach einem der Ansprüche 1 bis 3, **dadurch gekennzeichnet, dass** das Laserstrahlschweißen mit einer Vorschubgeschwindigkeit von mehr als 4 m/min, vorzugsweise mit einer Vorschubgeschwindigkeit im Bereich von 5 bis 8 m/min durchgeführt wird.

5. Verfahren nach einem der Ansprüche 1 bis 4, **dadurch gekennzeichnet, dass** die Oszillation des Laserstrahls (6) mit einem strichförmigen, ringförmigen oder polygonalen Schwingungsprofil durchgeführt wird.

6. Verfahren nach einem der Ansprüche 1 bis 5, **dadurch gekennzeichnet, dass** der Zusatzdraht (11) einen Kohlenstoff-Massenanteil von mindestens 0,1 Gew.-%, vorzugsweise um mindestens 0,3 Gew.-% aufweist.

7. Verfahren nach einem der Ansprüche 1 bis 6, **dadurch gekennzeichnet, dass** der Zusatzdraht (11) folgende Zusammensetzung aufweist:
0,1 - 0,4 Gew.-% C,
0,5 - 2,0 Gew.-% Si,
1,0 - 2,5 Gew.-% Mn,
0,5 - 2,0 Gew.-% Cr + Mo, und
1,0 - 4,0 Gew.-% Ni,
Rest Eisen und unvermeidbare Verunreinigungen.

8. Verfahren nach einem der Ansprüche 1 bis 7, **dadurch gekennzeichnet, dass** der Zusatzdraht (11) vor dem Zuführen in das Schmelzbad (9) zumindest in einem Längenabschnitt auf eine Temperatur von mindestens 50°C, vorzugsweise mindestens 90°C erwärmt wird.

9. Verfahren nach einem der Ansprüche 1 bis 8, **dadurch gekennzeichnet, dass** das Schmelzbad (9) während des Laserstrahlschweißens mit Schutzgas beaufschlagt wird.

10. Verfahren nach einem der Ansprüche 1 bis 9, **dadurch gekennzeichnet, dass** das oder die Stahlbleche (1, 2; 2') eine Blechdicke im Bereich von 0,5 bis 4 mm, vorzugsweise 0,8 bis 2,5 mm aufweisen.

11. Verfahren nach einem der Ansprüche 1 bis 10, **dadurch gekennzeichnet, dass** die Stahlbleche (1, 2; 2') eine unterschiedliche Blechdicke und/oder eine unterschiedliche Zugfestigkeit aufweisen.

## Claims

1. Method for laser beam welding of one or more steel sheets made of press-hardenable manganese-boron steel, wherein at least one of the steel sheets (1, 2; 2') has a coating (4) made of aluminium and the laser beam welding takes place by feeding a filler wire (11) into the melt bath (9) generated exclusively by means of a laser beam (6), wherein the filler wire (11) contains at least one austenite-stabilising alloy element, and wherein the laser beam (6) is set into oscillation such that it oscillates transverse to the welding direction, **characterised in that** the oscillation frequency of the laser beam (6) is at least 200 Hz, preferably at least 500 Hz, **in that** the geometry of the weld seam (13) is detected and **in that** the oscillation frequency and/or the amplitude of the oscillating laser beam (6) are varied as a function of the detected geometry of the weld seam (13).

2. Method according to claim 1, **characterised in that** the steel sheet(s) (1, 2; 2') is or are joined during laser beam welding in the butt joint or overlap joint with a gap (3) of less than 0.8 mm, preferably less than 0.6 mm, particular preferably less than 0.4 mm.

3. Method according to claim 1 or 2, **characterised in that** the amplitude of the oscillation of the laser beam (6) is less than 2 mm, preferably less than 1 mm.

4. Method according to any one of claims 1 to 3, **characterised in that** the laser beam welding is carried out at an advance speed of more than 4 m/min, preferably at an advance speed in the range of 5 to 8 m/min.

5. Method according to any one of claims 1 to 4, **characterised in that** the oscillation of the laser beam (6) is carried out with a linear, circular or polygonal oscillation profile.

6. Method according to any one of claims 1 to 5, **characterised in that** the filler wire (11) has a carbon mass proportion of at least 0.1% by weight, preferably around at least 0.3% by weight.

7. Method according to any one of claims 1 to 6, **characterised in that** the filler wire (11) has the following composition:
0.1 to 4.0% by weight C,
0.5 to 2.0% by weight Si,
1.0 to 2.5% by weight Mn,
0.5 to 2.0% by weight Cr + Mo, and
1.0 to 4.0% by weight Ni,
Remainder iron and unavoidable impurities.

8. Method according to any one of claims 1 to 7, **characterised in that** the filler wire (11) is heated prior to being supplied into the melt bath (9) at least in a longitudinal section to a temperature of at least 50°C, preferably at least 90°C.

9. Method according to any one of claims 1 to 8, **characterised in that** inert gas is applied to the melt bath (9) during the laser beam welding.

10. Method according to any one of claims 1 to 9, **characterised in that** the steel sheet(s) (1, 2; 2') has or have a sheet thickness in the range of 0.5 to 4 mm, preferably 0.8 to 2.5 mm.

11. Method according to any one of claims 1 to 10, **characterised in that** the steel sheets (1, 2; 2') have a different sheet thickness and/or a different tensile strength.

## Revendications

1. Procédé pour le soudage laser d'une ou de plusieurs tôles d'acier constituées d'acier au manganèse et au bore pouvant être embouti à chaud, dont au moins une des tôles d'acier (1, 2; 2') présente un revêtement (4) en aluminium et le soudage laser s'effectue par amenée d'un fil d'apport (11) dans le bain de fusion (9) produit exclusivement au moyen d'un faisceau laser (6), le fil d'apport (11) contenant au moins un élément d'alliage stabilisant l'austénite, le faisceau laser (6) étant mis en oscillation de manière à osciller transversalement au sens de soudage, **caractérisé en ce que** la fréquence d'oscillation du faisceau laser (6) atteint au moins 200 Hz, de préférence 500 Hz, **en ce que** la géométrie du joint de soudure (13) est captée, et **en ce que** la fréquence d'oscillation et/ou l'amplitude du faisceau laser (6) oscillant varie en fonction de la géométrie du joint de soudure (13).

2. Procédé selon la revendication 1, **caractérisé en ce que** la (les) tôle(s) d'acier (1, 2; 2') est (sont) jointe(s), lors du soudage laser, bout à bout ou à chevauchement avec un espace inférieur à 0,8 mm, de préférence inférieur à 0,6 mm, de façon particulièrement préférée inférieur à 0,4 mm.

3. Procédé selon la revendication 1 ou 2, **caractérisé en ce que** l'amplitude de l'oscillation du faisceau laser (6) est inférieure à 2 mm, de préférence inférieure à 1 mm.

4. Procédé selon l'une des revendications 1 à 3, **caractérisé en ce que** le soudage laser est réalisé avec une vitesse d'avancement supérieure à 4 m/min, de préférence avec une vitesse d'avancement comprise entre 5 et 8 m/min.

5. Procédé selon l'une des revendications 1 à 4, **caractérisé en ce que** l'oscillation du faisceau laser (6) est réalisée avec un profil d'oscillation en forme de trait, circulaire ou polygonal.

6. Procédé selon l'une des revendications 1 à 5, **caractérisé en ce que** le fil d'apport (11) présente une teneur massique en carbone d'au moins 0,1 % en poids, de préférence d'au moins 0,3 % en poids.

7. Procédé selon l'une des revendications 1 à 6, **caractérisé en ce que** le fil d'apport (11) présente la composition suivante :
0,1 - 0,4 % en poids de C,
0,5 - 2,0 % en poids de Si,
1,0 - 2,5 % en poids de Mn,
0,5 - 2,0 % en poids de Cr + Mo, et
1,0 - 4,0 % en poids de Ni,
le reste étant du fer et des impuretés inévitables.

8. Procédé selon l'une des revendications 1 à 7, **caractérisé en ce que** le fil d'apport (11) est chauffé à une température d'au moins 50 °C, de préférence au moins 90 °C, au moins dans une partie de longueur, avant d'être introduit dans le bain de fusion (9).

9. Procédé selon l'une des revendications 1 à 8, **caractérisé en ce que** le bain de fusion (9) est alimenté en gaz protecteur pendant le soudage laser.

10. Procédé selon l'une des revendications 1 à 9, **caractérisé en ce que** la ou les tôles d'acier (1, 2; 2') présentent une épaisseur de tôle de 0,5 à 4 mm, de préférence de 0,8 à 2,5 mm.

11. Procédé selon l'une des revendications 1 à 10, **caractérisé en ce que** les tôles d'acier (1, 2; 2') présentent une épaisseur de tôle et/ou une résistance à la traction différentes.
